Europäisches Patentamt

European Patent Office

Office européen des brevets

(11) Veröffentlichungsnummer: **0 265 612**
**A1**

## (12) EUROPÄISCHE PATENTANMELDUNG

(21) Anmeldenummer: 87111897.2

(22) Anmeldetag: 17.08.87

(51) Int. Cl.4: **H01F 27/08** , F16L 5/02

(30) Priorität: 29.08.86 DE 3629428

(43) Veröffentlichungstag der Anmeldung:
04.05.88 Patentblatt 88/18

(84) Benannte Vertragsstaaten:
AT BE CH DE ES FR GB IT LI NL SE

(71) Anmelder: **Siemens Aktiengesellschaft Berlin und München**
**Wittelsbacherplatz 2**
**D-8000 München 2(DE)**

(72) Erfinder: **Bendel, Wolfgang**
**Dobelstrasse 58**
**D-7250 Leonberg(DE)**

(54) **Transformator mit Luftkühlung.**

(57) Luftgekühlte Transformatoren mit in Gießharz eingegossenen Wicklungen weisen üblicherweise mindestens einen im Querschnitt ringförmigen, vertikalen Kühlkanal auf. Erfindungsgemäß ist in jedem Kühlkanal (15, 16) mindestens ein Streifen einer Schicht (19) aus einem bei Erwärmung über eine maximal zulässige Temperatur aufschäumenden Werkstoff vorgesehen und ist nach dem Aufschäumen jeder der Kühlkanäle (15, 16) durch den Schaum so weit verschlossen, daß die im Kühlbetrieb vorhandene Kaminwirkung unterbrochen ist. Transformatoren mit erfindungsgemäß vorgesehenen Schichten (19) sind vor allem dort einsetzbar, wo in ihrer Umgebung ein Sekundärbrand möglich ist, weil sie dort praktisch auch bei einem Brand durchgehend mit Teillast betriebsbereit bleiben.

EP 0 265 612 A1

## Transformator mit Luftkühlung

Die Erfindung betrifft einen Transformator mit Luftkühlung, mit in Gießharz eingegossenen Wicklungen und mit mindestens einem, vorzugsweise zwischen benachbarten Wicklungen angeordneten, umlaufenden, unter Umständen durch Stege unterbrochenen vertikalen Kühlkanal.

Derartige Transformatoren sind beispielsweise durch die DE-OS 22 46 235 mit zwei und durch die DE-OS 32 29 480 mit drei konzentrisch zueinander angeordneten ringförmigen Kühlkanälen bekanntgeworden. Da diese Kühlkanäle üblicherweise ausschließlich mit thermischem Antrieb der in ihnen aufsteigenden Luftsäule wirken, ist ihre lichte Weite relativ groß.

Tritt nun im Bereich dieser Transformatoren ein Brand auf, so wirken die Kühlkanäle möglicherweise als Kamine und sorgen unter Umständen durch schnelle Abfuhr der Rauchgase in sehr unerwünschter Weise für eine mehr oder weniger lebhafte Frischluftzufuhr. Zwar ist es bekannt, dem die Wicklungen einhüllenden Gießharz flammhemmende Zusätze beizumischen, diese haben aber keinen Einfluß auf einen Brand in der Nachbarschaft, solange die Gießharzummantelung der Wicklungen infolge von außen einwirkender unzulässiger Erwärmung nicht angegriffen wird.

Diese Beimischungen können allenfalls die Zerstörung der Transformatorwicklungen durch einen Sekundärbrand verzögern, sie können aber nicht die Ausbreitung desselben, beispielsweise unterhalb des Transformators beeinflussen.

Der Erfindung liegt daher die Aufgabe zugrunde, für Transformatoren der eingangs genannten Art eine Anordnung zu schaffen, durch die ein im Umgebungs-Bereich des Transformators auftretender Brand an seiner Ausbreitung und an einem Eindringen in den Transformator selbst behindert wird.

Diese Aufgabe wird erfindungsgemäß dadurch gelöst, daß in jedem Kühlkanal an mindestens einer der ihn begrenzenden Oberflächen wenigstens ein umlaufender Streifen eine Schicht aus einem bei Erwärmung über eine maximal zulässige Temperatur aufschäumenden Werkstoff trägt, wobei nach dem Aufschäumen jeder der Kühlkanäle durch den Schaum so weit verschlossen ist, daß die im Kühlbetrieb vorhandene Kaminwirkung des betreffenden Kühlkanals unterbrochen ist.

Nach zweckmäßigen Weiterbildungen der Erfindung ist vorgesehen, daß in dem aufschäumenden Werkstoff ein unbrennbares Gas, z.B. Kohlendioxid oder Wasserdampf, als Treibmittel dient, daß der Streifen aus aufschäumendem Werkstoff innerhalb der einzelnen Kühlkanäle in der Nähe von deren unterer Mündung vorgesehen ist, und daß der Streifen aus aufschäumendem Werkstoff als selbstklebende Folie aufgebracht ist.

Weitere vorteilhafte Ausgestaltungen der Erfindung sind in den Ansprüchen 5 bis 8 angegeben.

Die erfindungsgemäße Anordnung ist sehr vorteilhaft, weil sie beim Auftreten eines Brandes in der Nähe des von ihr geschützten Transformators in ihrer Umgebung ei nen Austausch von Rauch, Gas und Luft wirksam behindert und dadurch die mögliche Ausbreitung des Brandes in den meisten Fällen so weit verzögert, daß er durch weitere Maßnahmen gelöscht werden kann. Außerdem bleibt der erfindungsgemäß gestaltete Transformator auch während des Brandes und für die Zeit danach, zumindest für einen Teillastbetrieb ohne Kühlung durchgehend betriebsbereit.

Ein Ausführungsbeispiel der Erfindung wird anhand einer Zeichnung näher erläutert.

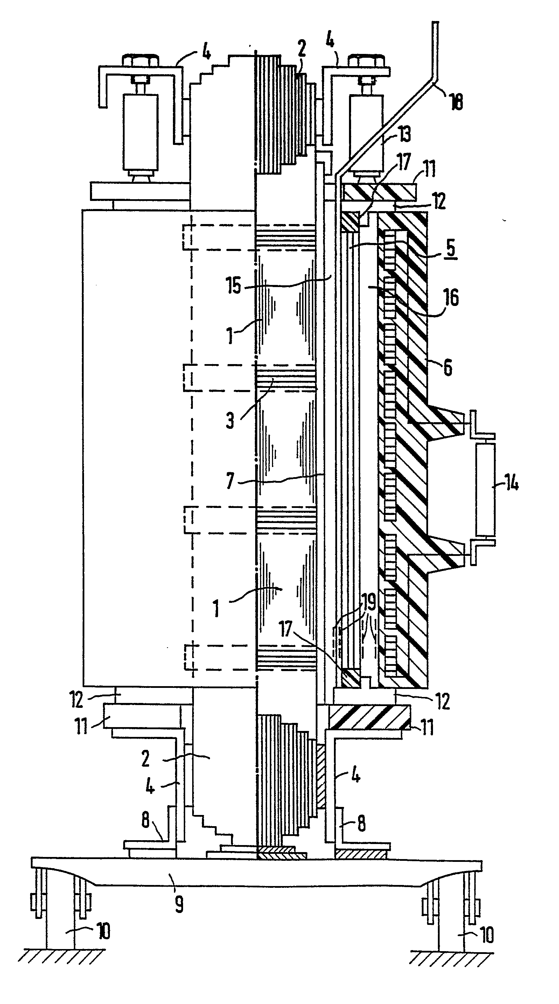

Die einzige Figur derselben zeigt in Ansicht und Halbschnitt einen luftgekühlten Transformator mit zwei Kühlkanälen.

Ein aus Blechlamellen zusammengesetzter Eisenkern 1 mit Jochen 2 wird durch Bandagen 3 zusammengehalten. Die Joche 2 werden außerdem durch Jochpreßbalken 4 zusammengehalten, die gleichzeitig axiale Einspannkräfte einer Unterspannungswicklung 5 sowie einer Oberspannungswicklung 6 auf an den Eisenkern anliegende Zugdeckplatten 7 übertragen. Die Jochpreßbalken 4 am unteren Joch 6 tragen Winkel 8, die Teil eines Fahrgestells 9 mit Rollen 10 sind.

Die Unterspannungswicklung 5 und die Oberspannungswicklung 6 sind zwischen ihnen gemeinsamen Preßklötzen 11 eingespannt, wobei die erforderliche Spannkraft durch sich am an dem äußeren Joch 2 abstützende Preßelemente 13 eingestellt ist. Die Preßklötze 11 sind mit elastischen, gegenüber der Zeichnungsebene um etwa 45° verdrehten Auflagen 12 versehen, die gleichzeitig Fertigungstoleranzen der Unterspannungswicklung 5 sowie der Oberspannungswicklung 6 ausgleichen und die Wicklungen schwingungstechnisch von dem Eisenkern 1 und den Jochen 2 entkoppeln.

Die Oberspannungswicklung 6 ist vollständig in Gießharz eingehüllt und besteht aus elektrisch in Reihe geschalteten nicht näher bezeichneten Spulen. Die Oberspannungswicklungen 6 der drei Phasen des gleichen Transformators sind durch Schaltleisten 14 vorzugsweise in einer Dreieckschaltung miteinander verbunden.

Die Unterspannungswicklung 5 besteht im wesentlichen aus einem spiralig aufgewickelten, nicht gesondert bezeichneten Bandwerkstoff, dessen Breite annähernd gleich der Länge der Eisenkernschenkel in Achsrichtung ist. Zur elektrischen Isolierung der aufeinanderliegenden Windungen dient eine nur wenige Mikrometer starke nicht dargestellte Folie, die etwas breiter ist als der Bandwerkstoff und demzufolge an beiden Enden des Wickels in Achsrichtung etwas vorsteht. Zum Schutz der vorstehenden Folie und gleichzeitig auch zum Schutz der Kanten des aufgewickelten Bandwerkstoffes, ist auf den ringförmigen Stirnseiten des die Unterspannungswicklung 5 darstellenden Wickels je ein angegossener Gießharzring 17 vorgesehen. Jeder dieser Gießharzringe 17 stellt darüber hinaus auch einen gasdichten Abschluß des Wicklungsinneren nach außen dar.

Die Enden des Wickelleiters der Unterspannungswicklung 5 sind über ihre gesamte Breite mit als Ausleitung dienenden Leiterschienen 18 verschweißt, von denen jedoch nur die innerhalb der Unterspannungswicklung 5 liegende dargestellt ist. Die Leiterschiene 18 erstreckt sich nach unten bis an den unteren Rand des Gießharzringes 17 und ist oben aus der Wicklung heraus-und durch Abbiegungen seitlich vom oberen Joch 2 weggeführt. Das obere freie Ende der Leiterschiene 18 ist in nicht dargestellter Art und Weise mit Bohrungen versehen und dient zum Anschluß der Unterspannungswicklung 5 an ein ebenfalls nicht dar gestelltes Niederspannungs-Versorgungsnetz.

Die Unterspannungswicklung 5 mit ihrer inneren Ausleitung 18 ist in nicht dargestellter Art und Weise in einem gewissen Abstand gegenüber dem Eisenkern 1 durch Distanzleisten abgestützt, so daß zwischen dem Eisenkern 1 und der Unterspannungswicklung 5 ein Kühlkanal 15 mit einer radialen Stärke von etwa 1 cm offengehalten ist. Durch entsprechende Bemessung des Außendurchmessers der Unterspannungswicklung 4 sgq qtn Innendurchmessers der Oberspannungswicklung 6 ist auch zwischen diesen beiden konzentrisch zueinander angeordneten Bauteilen ein im Querschnitt ring-oder rechteckförmiger Kühlkanal 16 freigehalten, dessen radiale Stärke nicht kleiner als 1 cm ist.

Beim Betrieb des Transformators werden der Eisenkern 1, die Unterspannungswicklung 5 und die Oberspannungswicklung 6 durch unvermeidbar auftretende Verlustleistungen aufgeheizt. In der Folge davon wird auch die Luft in den Kühlkanälen 15 und 16 erwärmt und steigt in den Kühlkanälen 15 und 16 nach oben, wobei sie gleichzeitig Frischluft von unten ansaugt. Der thermische Antrieb der Luftsäulen in den Kühlkanälen 15 und 16 ist umso stärker je höher die Differenzen zwischen der Temperatur der zugeführten Frischluft einerseits und der Temperatur des Eisenkernes 1, der Unterspannungswicklung 5 und der Oberspannungswicklung 6 andererseits sind. Daraus ergibt sich beim Betrieb des Transformators mit Nennleistung eine verhältnismäßig kräftige Luftströmung in den Kühlkanälen 15 und 16.

An der Unterspannungswicklung 5 sind in der Nähe von deren unterem Gießharzring 17, sowohl auf der Innen-als auch auf der Außenseite dünne Schichten 19 aus einem bei Erwärmung über eine maximal zulässige Temperatur aufschäumendem Werkstoff vorgesehen. Desgleichen ist auch auf der Innenseite der Oberspannungswicklung 6 in der Nähe von deren unterem Rand eine gleichartige Schicht 19 aus dem bei Erwärmung über eine maximal zulässige Temperatur aufschäumendem Werkstoff angebracht.

Steigt die Temperatur der von den Kühlkanälen 15 und 16 an ihren unteren Enden angesaugten Luft beispielsweise infolge eines Brandes unterhalb des Transformators über die an dieser Stelle maximal zulässige Betriebstemperatur, so schäumen die Streifen 19 auf und verschließen die Kühlkanäle 15 und 16, so daß der Transformator als Antrieb für eine Rauchabfuhr oder für eine Luftumwälzung ausfällt. Der von den Schichten 19 gebildete Schaumstoff hat zwar eine gute thermische Beständigkeit, ist jedoch mechanisch wesentlich weniger fest als die Gießharzummantelung der Oberspannungswicklung 6 oder als der die Unterspannungswicklung 5 darstellende Bandwerkstoff und die Gießharzringe 17, so daß der Schaumstoff relativ leicht wieder entfernt und durch eine neue Schicht 19 ersetzt werden kann.

Anstelle von in Form von schmalen Streifen am unteren Ende der Unterspannungswicklung 5 und der Oberspannungswicklung 6 aufgebrachten Schichten 19 können die die Kühlkanäle 15 und 16 bildenden Baugruppen, beispielsweise durch Tauchen, Spritzen, auch aus Kartuschen, oder Streichen, auch vollständig mit einer Schicht 19 aus dem aufschäumenden Werkstoff versehen werden. Wobei bei diesen großflächigen Beschichtungen die Verwendung von wasser-oder lösungsmittelverdünnbaren Ein-und Mehrkomponenten Anstrichstoffen und beim Aufbringen von relativ schmalen Streifen die Verwendung von selbstklebenden, die Schicht 19 tragenden Folien vorzuziehen ist.

Zur Gewährleistung eines beim Auftreten eines Brandes nahezu unverzögerten Ansprechens der Schicht 19 ist es zweckmäßig, diese nach Möglichkeit auf denjenigen der die Kühlkanäle 15 und 16 flankierenden Bauteilen anzubringen, die die jeweils kleinere Wärmekapazität haben, weil dadurch beim Auftreten eines Umgebungsbrandes die schnellstmögliche Aufheizung der Schicht 19 bis auf ihre Ansprechtemperatur erreicht wird. Beim dargestellten Ausführungsbeispiel hat die Unterspannungswicklung 5 eine deutlich geringere Wärmespeicherkapazität als der Eisenkern 1 und die Oberspannungswicklung 6, so daß gerade die an ihr vorgesehenen Schichten 19 von außen unverzögert aufheizbar sind.

## Ansprüche

1. Transformator mit Luftkühlung, mit in Gießharz eingegossenen Wicklungen (5, 6) und mit mindestens einem, vorzugsweise zwischen benachbarten Wicklungen (5, 6) angeordneten, umlaufenden unter Umständen auch durch Stege unterbrochenen, vertikalen Kühlkanal (15, 16),
**dadurch gekennzeichnet,**
-daß in jedem Kühlkanal (15, 16) mindestens ein umlaufender Streifen eine Schicht (19) aus einem bei Erwärmung über eine maximal zulässige Betriebstemperatur aufschäumenden Werkstoff trägt und
-daß nach dem Aufschäumen jeder der Kühlkanäle (15, 16) durch den Schaum so weit verschlossen ist, daß die im Kühlbetrieb vorhandene Kaminwirkung der Kühlkanäle (15, 16) unterbrochen ist.

2. Transformator nach Anspruch 1, **dadurch gekennzeichnet** , daß in dem aufschäumenden Werkstoff ein unbrennbares Gas, z.B. Kohlendioxid oder Wasserdampf als Treibmittel dient.

3. Transformator nach Anspruch 1 oder 2, **dadurch gekennzeichnet,** daß der Streifen der Schicht (19) aus aufschäumendem Werkstoff innerhalb der einzelnen Kühlkanäle (15, 16) in der Nähe von deren unterer Mündung vorgesehen ist.

4. Transformator nach einem der Ansprüche 1 bis 3, **dadurch gekennzeichnet,** daß der Streifen der Schicht (19) aus aufschäumendem Werkstoff als selbstklebende Folie aufgebracht ist.

5. Transformator nach Anspruch 1 oder 2, **dadurch gekennzeichnet** , daß die Schicht (19) des aufschäumenden Werkstoffs auf eine oder beide einen Kühlkanal (15, 16) begrenzende Oberfläche über deren ganze Höhe und auf deren ganzen Umfang als wasser-oder lösungsmittelverdünnbarer Anstrich oder als Paste aufgebracht ist.

6. Transformator nach einem der Ansprüche 1 bis 5, **dadurch gekennzeichnet,** daß der aufschäumende Stoff ein Mehrkomponentenstoff ist.

7. Transformator nach einem der Ansprüche 1 bis 6, **dadurch gekennzeichnet,** daß die den aufschäumenden Stoff tragende Oberfläche jeweils Teil der die kleinere Wärmespeicherkapazität aufweisenden, von den gemeinsam den Kühlkanal (15, 16) bildenden Baugruppen ist.

8. Transformator nach einem der Ansprüche 1 bis 7, **dadurch gekennzeichnet,** daß der aufgeschäumte Werkstoff eine geringere mechanische, aber eine ebenso gute thermische Festigkeit aufweist, wie das die Wicklungen (5, 6) umhüllende Gießharz.

9. Transformator nach einem der Ansprüche 1 bis 8, **dadurch gekennzeichnet,** daß der aufschäumende Werkstoff chemisch neutral ist und keine toxischen Komponenten enthält.

86 P 6510

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-A-2 947 593 (WALTER FUCHS ROSTSCHUTZ-UNTERNEHMEN) <br> * Seite 11, letzten 2 Absätze; Seite 12 * <br><br> --- | 1 | H 01 F 27/08 <br> F 16 L 5/02 |
| A | FR-A-2 200 749 (GEBRÜDER TROX) <br> * Seite 2, Zeilen 26-38; Seite 3 * <br> --- | 1 | |
| A | DE-A-2 251 933 (BERTOS AG) <br> --- | | |
| A | GB-A-2 107 183 (DIXON INT. LTD) <br> ----- | | |

|  | RECHERCHIERTE SACHGEBIETE (Int. Cl.4) |
|---|---|
|  | H 01 F 27/00 <br> F 16 L 5/00 <br> A 62 C 3/00 |

Der vorliegende Recherchenbericht wurde für alle Patentansprüche erstellt

| Recherchenort | Abschlußdatum der Recherche | Prüfer |
|---|---|---|
| DEN HAAG | 27-11-1987 | VANHULLE R. |